# EUROPÄISCHE PATENTSCHRIFT

(11) **EP 1 591 745 B1**
(45) Veröffentlichungstag und Bekanntmachung des Hinweises auf die Patenterteilung: **03.10.2007**
(21) Anmeldenummer: 05008017.5
(22) Anmeldetag: 13.04.2005
(51) Int. Cl.: F41H 5/22, F16D 43/21, F16D 7/02

(54) **Einrichtung zum Öffnen und Schliessen eines Lukendeckels, insbesondere einer Schiebeluke an einem Kampffahrzeug**
Device to open and close a hatch cover, in particular a sliding hatch of an armoured vehicle
Dispositif pour l'ouverture et la fermeture d'une trappe, en particuler d'une trappe glissante d'un véhicule de combat

(30) Priorität: 30.04.2004 DE 202004006967 U
(43) Veröffentlichungstag der Anmeldung: 02.11.2005
(73) Patentinhaber: Krauss-Maffei Wegmann GmbH & Co. KG, 80997 München (DE)
(72) Erfinder: Fehr, Michael, Dipl.-Ing., 34590 Wabern (DE)
(74) Vertreter: Feder, Wolf-Dietrich

(56) Entgegenhaltungen:
- DE-A1- 4 240 140
- DE-A1- 10 334 076
- DE-A1- 19 710 365
- GB-A- 2 297 000
- US-A- 5 207 539

## Beschreibung

Die Erfindung betrifft eine Einrichtung zum Öffnen und Schließen eines Lukendeckels, insbesondere einer Schiebeluke an einem Kampffahrzeug mit den Merkmalen aus dem Oberbegriff des Patentanspruchs 1. Eine solche Schiebeluke ist z.B. in DE 4240140 A1 beschrieben.

Bei derartigen Einrichtungen besteht das Problem, dass eine manuelle Notöffnung des Lukendeckels sowohl von innen aus dem Fahrzeug heraus als auch von außen her möglich sein soll, was zur Bedingung hat, dass das maximal mögliche Drehmoment an der Rutschkupplung ohne großen Aufwand einstellbar sein muss.

Es sind Rutschkupplungen bekannt, bei denen das maximal mögliche Drehmoment über Muttern und Kontermuttern, die auf einer Welle sitzen, eingestellt werden kann, dies erfordert aber im eingebauten Zustand einen erheblichen Aufwand. Es sind weiterhin Rutschkupplungen bekannt, bei denen das maximal mögliche Drehmoment über eine Hülse von außen einstellbar ist. Bei diesen Rutschkupplungen ist aber nur eine Abtriebswelle über die Rutschkupplung mit dem Schneckengetriebe koppelbar, was zur Folge hat, dass eine manuelle Notöffnung nur von einer Seite her möglich wäre.

Der Erfindung liegt die Aufgabe zugrunde, eine Einrichtung mit den Merkmalen aus dem Oberbegriff des Patentanspruchs 1 so auszugestalten, dass einerseits Abtriebswelle und Gegenwelle über die Rutschkupplung an das Schneckengetriebe angekoppelt sind und andererseits die Rutschkupplung ohne großen Aufwand von außen so eingestellt werden kann, dass eine manuelle Notöffnung der Luke sowohl von außen her als auch aus dem Fahrzeuginneren heraus möglich ist.

Die Lösung dieser Aufgabe erfolgt erfindungsgemäß mit den Merkmalen aus dem kennzeichnenden Teil des Patentanspruchs 1. Vorteilhafte Weiterbildungen der erfindungsgemäßen Einrichtung sind in den abhängigen Ansprüchen beschrieben.

Wie weiter unten anhand eines Ausführungsbeispiels näher erläutert, ist es bei der erfindungsgemäßen Einrichtung möglich, die Rutschkupplung von außen ohne Probleme einzustellen, und es werden für das Festsetzen der Rutschkupplung keine Kontermuttern benötigt.

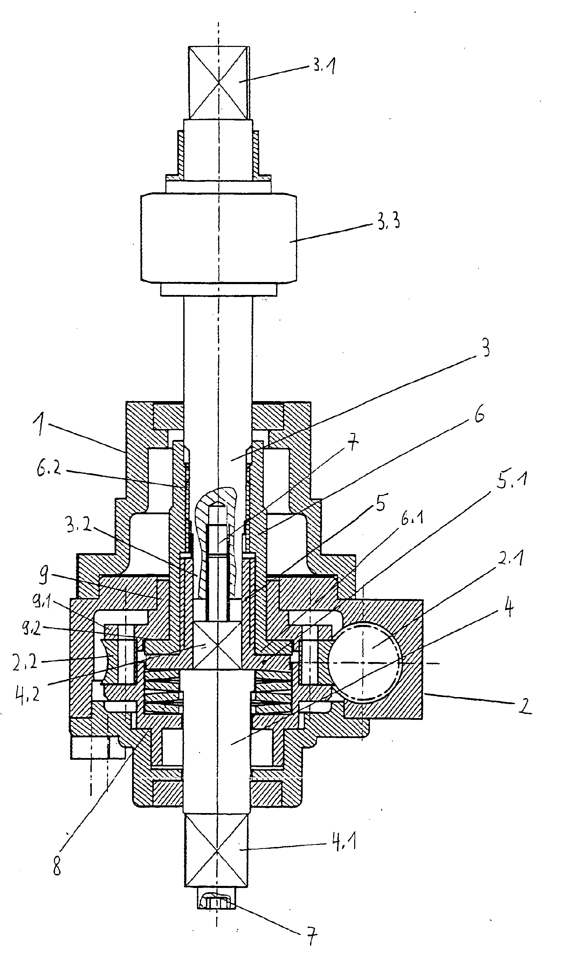

Im folgenden wird anhand der beigefügten Zeichnung ein Ausführungsbeispiel für eine Einrichtung zum Öffnen und Schließen des Lukendeckels einer Schiebeluke an einem Kampffahrzeug näher erläutert. Dabei sind in der Zeichnung nur die Bauteile dargestellt und erläutert, die für die Funktionsweise der Einrichtung von besonderer Bedeutung sind. Die Schiebeluke selbst mit dem Lukendeckel und der am Lukendeckel angeordneten Zahnstange sind nicht dargestellt. Bezüglich dieser Ausbildung wird beispielsweise auf DE 4 240 140 A1 und DE 195 04 922 A1 verwiesen.

Die in der Zeichnung dargestellte Einrichtung besitzt ein Gehäuse 1, das in nicht näher dargestellter Weise im Bereich einer Schiebeluke angeordnet ist. Im Gehäuse 1 ist ein selbsthemmendes Schneckengetriebe 2 angeordnet, dessen Schneckenwelle 2.1 von einem nicht dargestellten Antriebsmotor angetrieben wird. In die Schneckenwelle 2.1 greift ein Schneckenrad 2.2 ein, das über die weiter unten näher erläuterte Rutschkupplung einerseits mit einer Abtriebswelle 3 und andererseits mit einer Gegenwelle 4 gekoppelt ist. Im dargestellten Ausführungsbeispiel ist die Abtriebswelle 3 nach außen aus dem Fahrzeug herausgeführt. Sie besitzt an ihrem äußeren Ende ein Abtriebsritzel 3.3, das in nicht dargestellter Weise in die Zahnstange am Lukendeckel der Schiebeluke eingreift. Am äußeren Ende außerhalb des Abtriebsritzels 3.3 ist weiterhin ein Vierkant 3.1 angeordnet, auf den ein Betätigungselement, beispielsweise eine Kurbel oder ein Handrad, zur manuellen Notöffnung des Lukendeckels aufgesteckt werden kann. Die Gegenwelle 4 ist in nicht dargestellter Weise in das Fahrzeuginnere hineingeführt. Auch sie besitzt an ihrem freien Ende einen Vierkant 4.1, auf den in der gleichen Weise ein Betätigungselement zur manuellen Notöffnung aufsteckbar ist. Abtriebswelle 3 und Gegenwelle 4 sind konzentrisch zueinander angeordnet, und die Abtriebswelle 3 greift mit einem Vierkant 3.2 in eine Verstellhülse 5 ein, während die Gegenwelle 4 mit einem Vierkant 4.2 von der entgegengesetzten Seite ebenfalls in die Verstellhülse 5 eingreift. Durch die Gegenwelle 4 und die Verstellhülse 5 ist eine Schraube 7 in das innere Ende der Abtriebswelle 3 hineingeführt. Durch diese Schraube 7 sind Abtriebswelle 3 und Gegenwelle 4 in axialer Richtung unverschiebbar, aber lösbar miteinander verbunden.

Die Verstellhülse 5 ist in das der Gegenwelle 4 zugewandte Ende einer Übertragungshülse 6 eingeschraubt. Durch diese Übertragungshülse 6 ist die Abtriebswelle 3 hindurchgeführt, wobei sie in dem sich an die Verstellhülse 5 nach außen anschließenden Bereich der Übertragungshülse 6 mit dieser durch eine Kerbverzahnung 6.2 axial verschiebbar und im Hinblick auf Drehmomente gekoppelt verbunden ist.

Die Rutschkupplung besteht aus einem ersten Kupplungselement, das als konzentrisch zur Übertragungshülse 6 angeordnete Lagerhülse 9 ausgebildet ist, die drehbar im Getriebegehäuse 1 gelagert ist und über einen Flansch 9.1 mit dem Schneckenrad 2.2 verbunden ist. Die Kupplungsfläche 9.2 wird durch eine am Flansch 9.1 angeordnete Schulter gebildet.

Das zweite Kupplungselement wird durch einen Flansch 6.1 an dem der Gegenwelle 4 zugewandten Ende der Übertragungshülse 6 gebildet. Zur Erzeugung des Kupplungsdrucks dienen konzentrisch zur Gegenwelle 4 angeordnete Tellerfedern 8, die sich im Gehäuse 1 abstützen und von deren Kraft ein Flansch 5.1 beaufschlagt wird, der an dem der Gegenwelle 4 zugewandten Ende der Verstellhülse 5 angeordnet ist, die ja in die Übertragungshülse 6 eingeschraubt ist. Mittels dieser Konstruktion ist sowohl die Abtriebswelle 3 als auch die Gegenwelle 4 über die Rutschkupplung mit dem Schneckenrad 2.2 des Schneckengetriebes 2 gekoppelt.

Wenn eine manuelle Notöffnung durch Betätigen der Abtriebswelle 3 oder der Gegenwelle 4 möglich sein soll, muss die Rutschkupplung derart eingestellt sein, dass bei der manuellen Betätigung das selbsthemmende Schneckengetriebe 2 nicht mitgenommen wird. Zur Einstellung wird zunächst die Schraube 7 so weit gelockert, bis der Vierkant 3.2 der Abtriebswelle 3 aus der Verstellhülse 5 ausgetreten ist. Jetzt kann mittels der Kerbverzahnung 6.2 zwischen der Abtriebswelle 3 und der Übertragungshülse 6 die Übertragungshülse 6 festgelegt werden, und mit der Gegenwelle 4 kann die Verstellhülse 5 verdreht und somit gegenüber der Übertragungshülse 6 in axialer Richtung bewegt werden, wodurch die Tellerfedern 8 gespannt oder gelockert werden. Nach dem Einstellen der Rutschkupplung werden mittels der Schraube 7 Abtriebswelle 3 und Gegenwelle 4 wieder fest miteinander verschraubt, wobei der Vierkant 3.2 der Abtriebswelle 3 wieder in die Verstellhülse 5 eingreift. Damit ist die Rutschkupplung wieder blockiert und kann nicht weiter verstellt werden.

Zum manuellen Notöffnen des Lukendeckels wird die Abtriebswelle 3 oder die Gegenwelle 4 direkt gegen die Rutschkupplung betätigt. Das Schneckengetriebe 2 bleibt dabei stehen, da es selbsthemmend ausgebildet ist. Da die Rutschkupplung gefettet ist, kann man beim Notöffnen des Lukendeckels direkt gegen die Rutschkupplung arbeiten. Außerdem ist es zweckmäßig, wenn eine Reibfläche der Rutschkupplung aus einem Gleitwerkstoff besteht, der ein Fressen der Werkstoffe verhindert. Es ist ein bestimmtes Moment erforderlich, welches dafür sorgt, dass der Lukendeckel sicher gehalten wird. Die Einstellmöglichkeit der Rutschkupplung von außen ist dafür gedacht, dass man nach festgelegten Einsatzzeiten die Rutschkupplung ohne das Getriebe auszubauen prüfen und eventuell nachstellen kann. Im normalen Betrieb bleibt die Kupplung immer gleich eingestellt. Der Lukendeckel kann jederzeit sowohl von außen wie auch von innen geöffnet werden.

## Patentansprüche

1. Einrichtung zum Öffnen und Schließen eines Lukendeckels, insbesondere einer Schiebeluke an einem Kampffahrzeug, mit einem Antrieb, der ein in eine Zahnstange oder ein Zahnrad eingreifendes Abtriebsritzel aufweist, **dadurch gekennzeichnet, dass** der Antrieb einen Antriebsmotor aufweist, der über ein selbsthemmendes Schneckengetriebe (2) und eine Rutschkupplung (9-6.1) eine Abtriebswelle (3) antreibt, an der das Abtriebsritzel angeordnet ist, wobei die Rutschkupplung (9-6.1) ein mit dem konzentrisch zur Abtriebswelle (3) liegenden Schneckenrad (2.2) fest verbundenes erstes Kupplungselement (9) aufweist, gegen das unter Kraftwirkung von Federn (8) ein zweites, mit der Abtriebswelle (3) gekoppeltes Kupplungselement (6.1) reibschlüssig angepresst wird und wobei axial zur Abtriebswelle (3) eine mit dieser gekoppelte Gegenwelle (4) angeordnet ist und Abtriebswelle (3) und Gegenwelle (4) Vorrichtungen (3.1, 4.1) zur manuellen Betätigung aufweisen und eine Vorrichtung (5) zum Einstellen des Kupplungsdrucks an der Rutschkupplung vorgesehen ist, indem die Abtriebswelle (3) und die Gegenwelle (4) über einen Vierkant (3.2, 4.2) mit jeweils einem Ende einer Verstellhülse (5) gekoppelt und über eine durch die Gegenwelle (4) und die Verstellhülse (5) in die Abtriebswelle (3) geführte Schraube (7) miteinander in axialer Richtung unverschiebbar, aber lösbar verbunden sind, und dass die Verstellhülse (5) in das der Gegenwelle (4) zugewandte Ende einer Übertragungshülse (6) eingeschraubt ist, durch welche die Abtriebswelle (3) geführt und mit der sie im sich an die Verstellhülse (5) anschließenden Bereich durch eine Kerbverzahnung (6.2) axial verschiebbar und im Hinblick auf Drehmomente gekoppelt verbunden ist, und dass die Übertragungshülse (6) an ihrem der Gegenwelle (4) zugewandten Ende einen Flansch (6.1) aufweist, der das zweite Kupplungselement bildet und an dem konzentrisch zur Abtriebswelle (3) liegenden ersten Kupplungselement (9) anliegt, während die Verstellhülse (5) an ihrem der Gegenwelle (4) zugewandten Ende einen Flansch (5.1) aufweist, der von der Kraft der Federn (8) beaufschlagt ist.

2. Einrichtung nach Anspruch 1, **dadurch gekennzeichnet, dass** die Federn (8) als konzentrisch zur Gegenwelle (4) angeordnete Tellerfedern ausgebildet sind.

3. Einrichtung nach Anspruch 1 oder 2, **dadurch gekennzeichnet, dass** das erste Kupplungselement (9) als konzentrisch zur Übertragungshülse (6) angeordnete Lagerhülse ausgebildet ist, die drehbar im Getriebegehäuse (1) gelagert ist und über einen Flansch (9.1) mit den Schneckenrad (2.2) verbunden ist, wobei die dem zweiten Kupplungselement (6.1) gegenüberliegende Kupplungsfläche durch eine am Flansch (9.1) angeordnete Schulter (9.2) gebildet wird.

4. Einrichtung nach einem der Ansprüche 1 bis 3, **dadurch gekennzeichnet, dass** die Vorrichtung zur manuellen Betätigung der Abtriebswelle (3) und der Gegenwelle (4) als an den jeweils äußeren Enden der Wellen (3, 4) angeordnete Vierkante (3.1, 4.1) ausgebildet sind, auf die ein beispielsweise als Handhebel oder Handrad ausgebildetes Betätigungselement aufsteckbar ist.

## Claims

1. Device for opening and closing a hatch cover, in particular of a sliding hatch on a combat vehicle, having a drive, which comprises an output pinion that engages into a gear rack or a gearwheel, **characterized in that** the drive comprises a drive motor, which via a self-locking worm gear (2) and a slipping clutch (9-6.1) drives an output shaft (3), on which the output pinion is disposed, therein the slipping clutch (9-6.1) comprises a first clutch element (9), which is firmly connected to the worm wheel (2.2) disposed concentrically with the output shaft (3) and against which under the action of force of springs (8) a second clutch element (6.1) coupled to the output shaft (3) is pressed in a friction-locking manner, and wherein a Countershaft (4) is disposed axially of, and coupled to, the output shaft (3), and output shaft (3) and countershaft (4) have devices (3.1, 4.1) for manual actuation and a device (5) is provided for adjusting the clutch pressure at the slipping clutch **in that** the output shaft (3) and the countershaft (4) are coupled by a square (3.2, 4.2) in each case to one end of an adjusting sleeve (5) and are connected to one another in an axially non-displaceable but detachable manner by a screw (7), which extends through the countershaft (4) and the adjusting sleeve (5) into the output shaft (3), and that the adjusting sleeve (5) is screwed into a transmission sleeve (6) at the end thereof facing the countershaft (4), the output shaft (3) being led through the transmission sleeve (6) and being connected thereto in the region adjoining the adjusting sleeve (5) by means of a serration (6.2) in an axially displaceable and, with regard to torques, coupled manner and that the transmission sleeve (6) on its end facing the countershaft (4) has a flange (6.1), which forms the second clutch element and lies against the first clutch element (9) disposed concentrically with the output shaft (3), while the adjusting sleeve (5) on its end facing the countershaft (4) has a flange (5.1), which is acted upon by the force of the springs (8).

2. Device according to claim 1, **characterized in that** the springs (8) take the form of cup springs disposed concentrically with the countershaft (4).

3. Device according to claim 1 or 2, **characterized in that** the first clutch element (9) takes the form of a bearing sleeve, which is disposed concentrically with the transmission sleeve (6), mounted rotatably in the gear housing (1) and connected by a flange (9.1) to the worm wheel (2.2), wherein the clutch face lying opposite the second clutch element (6.1) is formed by a shoulder (9.2) disposed on the flange (9.1).

4. Devise according to one of claims 1 to 3, **characterized in that** the device for manual actuation of the output shaft (3) and the countershaft (4) take the form of squares (3.1, 4.1), which are disposed on the respective outer ends of the shafts (3, 4) and onto which an actuating element for example in the form of a hand lever or handwheel is mountable.

## Revendications

1. Dispositif d'ouverture et de fermeture d'une trappe, en particulier d'une trappe glissante d'un véhicule de combat, avec un entraînement qui présente un pignon de sortie s'engageant dans une crémaillère ou une roue dentée, **caractérisé en ce que** l'entraînement comporte un moteur d'entraînement qui commande un arbre de sortie (3) au moyen d'un engrenage à vis sans fin (2) autobloquant et d'un accouplement à friction (9-6.1) sur lequel est disposé le pignon de sortie, l'accouplement à friction (9-6.1) comprenant, relié fixement à une roue hélicoïdale (2.2) placée concentriquement par rapport à l'arbre de sortie (3), un premier élément de couplage (9) contre lequel est pressé par friction sous l'effet de la force de ressorts (8), un deuxième élément de couplage (6.1) couplé à l'arbre de sortie (3), et un arbre de renvoi (4) étant disposé axialement à l'arbre de sortie (3) et étant couplé à celui-ci, l'arbre de sortie (3) et l'arbre de renvoi (4) comportant des dispositifs (3.1, 4.1) de commande manuelle et un dispositif (5) de réglage de la pression d'accouplement étant prévu sur l'accouplement à friction, du fait que l'arbre de sortie (3) et l'arbre de renvoi (4) sont couplés par l'une de leur extrémité respective à un manchon de réglage (5), au moyen d'un carré (3.2, 4.2) et sont reliés de manière non mobile dans le sens axial, mais détachable, au moyen d'une vis (7) passée dans l'arbre de sortie (3) à travers l'arbre de renvoi (4) et le manchon de réglage (5), et **en ce que** le manchon de réglage (5) est vissé dans l'extrémité d'un manchon de transmission (6) tourné vers l'arbre de renvoi (4), dans lequel l'arbre de sortie (3) est guidé et auquel il est relié de manière axialement mobile, dans la zone raccordée au manchon de réglage (5) par une cannelure (6.2), et avec lequel il est solidaire sur le plan des couples, et **en ce que** le manchon de transmission (6) comprend sur son extrémité tournée vers l'arbre de renvoi (4), un collet (6.1) qui forme le deuxième élément de couplage et s'appuie sur le premier élément de couplage (9) placé concentriquement par rapport à l'arbre de sortie (3), tandis que le manchon de réglage (5) comporte sur son extrémité tournée vers l'arbre de renvoi (4), un collet (5.1) sollicité par la force des ressorts (8).

2. Dispositif selon la revendication 1, **caractérisé en ce que** les ressorts (8) sont conformés en rondelles ressort, disposées concentriquement par rapport à l'arbre de renvoi (4).

3. Dispositif selon l'une quelconque des revendications 1 ou 2, **caractérisé en ce que** le premier élément de couplage (9) est conformé en douille de palier disposée concentriquement par rapport au manchon de transmission (6) qui est monté de manière rotative dans la boîte d'engrenage (1) et est relié par un collet (9.1) à une roue hélicoïdale (2.2), la surface de couplage opposée au deuxième élément de couplage (6.1) étant constituée d'un épaulement (9.2) monté sur le collet (9.1).

4. Dispositif selon l'une quelconque des revendications 1 à 3, **caractérisé en ce que** les dispositifs de commande manuelle de l'arbre de sortie (3) et de l'arbre de renvoi (4) sont conformés en carrés (3.1, 4.1), disposés sur les extrémités extérieures respectives des arbres (3, 4) et sur lesquels peut être fixé un élément de commande constitué notamment d'un levier ou d'un volant manuel.
